# EUROPEAN PATENT APPLICATION

(11) **EP 2 538 530 A2**
(43) Date of publication of application: **26.12.2012**
(21) Application number: 12004621.4
(22) Date of filing: 20.06.2012
(51) Int. Cl.: H02K 57/00

(54) **Electromagnetic variable-speed motor**

(30) Priority: 21.06.2011 TW 100121564; 22.02.2012 TW 101105765
(71) Applicant: Industrial Technology Research Institute, Hsinchu Hsien (TW)
(72) Inventor: Peng, Ming-Tsan, Chutung Hsinchu 31040 (TW); Flack, Tim, Chutung Hsinchu 31040 (TW)
(74) Representative: Schaad, Balass, Menzl & Partner AG

(57) **Abstract**

An electromagnetic variable-speed motor includes a rotor having a plurality of permanent magnet structures, a stator disposed on the same axis as the rotor and having a plurality of teeth and a plurality of slots, and a variable-speed module disposed on the same axis as the rotor and the stator and at a position between the rotor and stator. Therein, the pole number of the variable-speed module no greater than the number of the slots such that the variable-speed module can be completely integrated with the stator, thereby providing a simplified yet strengthened structure which requires less components and fabrication costs than the prior art.

## Description

### CROSS REFERENCE TO RELATED APPLICAITONS

This application claims priority to Taiwanese Patent Application No. 100121564, filed on June 21, 2011 and Taiwanese Patent Application No. 101105765, filed on February 22, 2012.

### BACKGROUND of the DISCLOSURE

### 1. Technical Field of the Disclosure

The disclosure relates to electromagnetic variable-speed motors, and more particularly, to an electromagnetic variable-speed motor in which the pole number of a variable-speed module is no greater than the number of slots of a stator.

### 2. Description of Related Art

An electromagnetic variable-speed motor adjusts the speed of a rotor through modulation of air gap magnetic fields, and the modulation of air gap magnetic fields is provided by a variable-speed module.

A conventional electromagnetic variable-speed motor has a rotor, a variable-speed module, a stator and windings. The rotor has magnetic pole pairs and permanent magnet structures, such as surface permanent magnets and/or interior permanent magnets. The rotor has teeth and slots. The stator and the variable-speed module are disposed away from each other. With various practical needs, the stator and the variable-speed module can be integrally formed.

Since the variable-speed module does not match with the teeth of the stator in geometry, air gaps of the variable-speed module can be spaced from the slots of the stator at different distances and even staggered from the slots of the stator along with variation of the disposing angles, thus causing stator leakage inductance and adversely affecting the power and torque output of the electromagnetic variable-speed motor. On the other hand, even if the stator and the variable-speed module are integrally formed, since the variable-speed module does not completely match the stator in geometry, it will lead to a complicated fabrication process and a weak structure of the motor. Furthermore, it is difficult to dispose the windings in the slots of the stator.

Therefore, it is imperative to provide an electromagnetic variable-speed motor so as to overcome the above-described drawbacks.

### SUMMARY OF THE DISCLOSURE

The present disclosure provides an electromagnetic variable-speed motor that has a variable-speed module and a stator matched in geometric shape with the variable-speed module.

In an exemplary embodiment, the disclosure provides an electromagnetic variable-speed motor. The electromagnetic variable speed motor comprises: a rotor having a plurality of permanent magnet structures; a stator coaxially disposed with the rotor and having a plurality of teeth and a plurality of slots; and a variable-speed module coaxially disposed with the rotor and the stator and at a position between the rotor and the stator. In the electromagnetic variable speed motor, the pole number of the variable-speed module is no greater than the number of the slots, and the ratio of the number of magnetic pole-pairs of the stator to the number of magnetic pole-pairs of the rotor is 1: n or n: 1, wherein n is greater than 1.

The present disclosure further provides a magnetic variable-speed motor, including a rotor, a stator and a variable-speed module, wherein the rotor has a permanent magnet structure, the stator is coaxially disposed with the rotor and has a plurality of teeth and a plurality of slots, the variable-speed module is coaxially disposed with the rotor and the stator and disposed between the rotor and the stator and the pole number of the variable-speed module is equal to an integer multiplied with the number of a period group of the variable-speed module.

### BRIEF DESCRIPTION OF DRAWINGS

FIGS.1A, 1B and 1C are schematic structural diagrams of an electromagnetic variable-speed motor according to different embodiments of the disclosure;
FIG.2 is a partially enlarged view of the electromagnetic variable-speed motor of FIGS.1A and 1B;
FIG.3 is another partially enlarged view of the electromagnetic variable-speed motor of FIGS.1A and 1B;
FIGS. 4A and 4B are schematic structural diagrams of an electromagnetic variable-speed motor according to another embodiment of the disclosure;
FIG.4C is a winding chart applicable to the electromagnetic variable-speed motor of FIGS.4A and 4B;
FIGS.5A and 5B are schematic structural diagrams of an electromagnetic variable-speed motor according to another embodiment of the disclosure;
FIG.5C is a winding chart applicable to the electromagnetic variable-speed motor of FIGS.5A and 5B;
FIG6A is another structural schematic diagram of an electromagnetic variable-speed motor according to the present disclosure;
FIG.6B is a locally enlarged view of FIG.6A; and
FIG.6C is a variable schematic diagram of FIG6B.

### DETAILED DESCRIPTION

In the following detailed description, for purposes of explanation, numerous specific details are set forth in order to provide a through understanding of the disclosed embodiments. It will be apparent, however, that one or more embodiments may be practiced without these specific details. In other instances, well-known structures and devices are schematically shown in order to simplify the drawing.

The disclosure provides an electromagnetic variable-speed motor in which a stator and a variable-speed module completely match with each other in geometry. Since the variable-speed module and the slots of the stator (the teeth of the stator) have the same structure, the variable-speed module can be completely aligned with the teeth of the stator so as to be further integrated thereto. As such, the variable-speed module completely matches with the stator in geometry to thereby effectively reduce the leakage inductance of the stator, strengthen the overall structure and facilitate the assembly process.

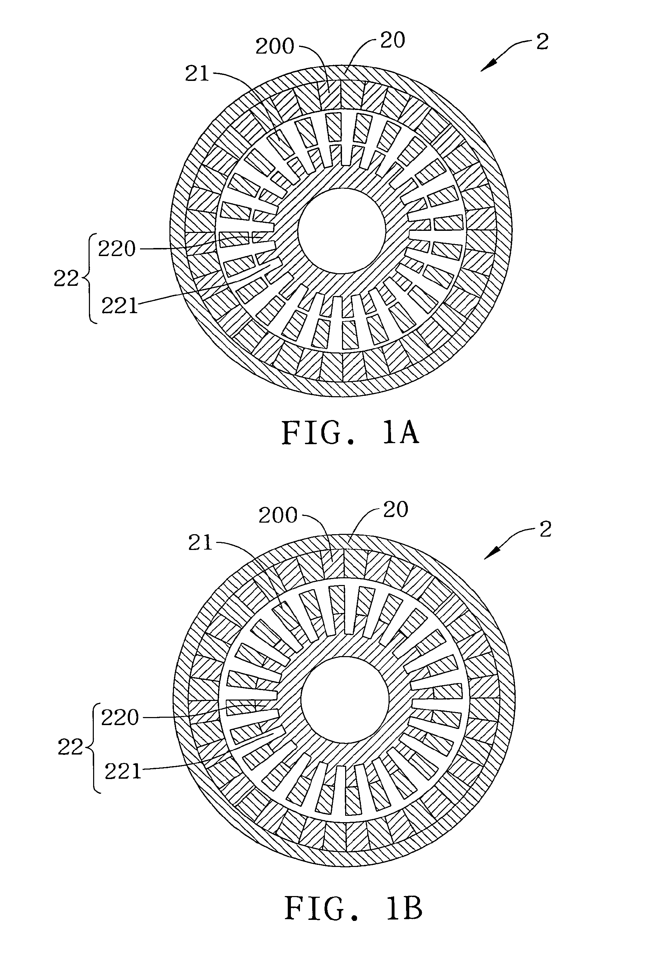

FIGS. 1A to 1C are structural diagrams of an electromagnetic variable-speed motor 2 according to different embodiments of the disclosure. Referring to the drawings, the electromagnetic variable-speed motor 2 has a rotor 20, a variable-speed module 21 and a stator 22.

The rotor 20 has a plurality of permanent magnet structures 200. The stator 22 is disposed on the same axis as the rotor 20 and has a plurality of teeth 220 and a plurality of slots 221. The variable-speed module 21 is disposed on the same axis as the rotor 20 and the stator 22 and at a position between the rotor 20 and stator 22. The disclosure is **characterized in that** the pole number of the variable-speed module 21 is no greater than the number of the slots 221.

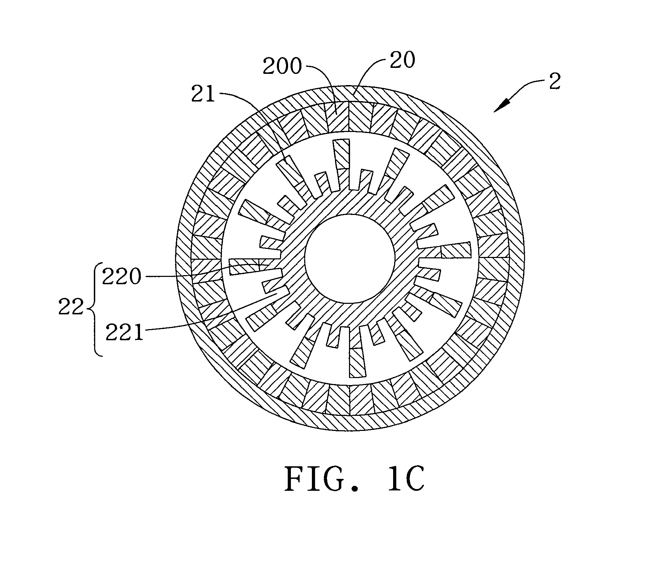

In an embodiment as shown in FIGS.1A and 1B, the pole number of the variable-speed module 21 is equal to the number of the slots 221 of the stator 22. Further, since the number of the slots 221 of the stator 22 is equal to the number of the teeth 220 of the stator 22, the number of the teeth 220 is also equal to the pole number of the variable-speed module 21. In another embodiment as shown in FIG. 1C, the pole number of the variable-speed module 21 is less than the number of the slots 221 of the stator 22. In particular, the pole number of the variable-speed module 21 in FIG. 1C is only a half of the pole number of the variable-speed module 21 in FIGS. 1A and 1B. Furthermore, the variable-speed module 21 in FIG.1C is integrated with the teeth 220 of the stator 22. Alternatively, the variable-speed module 21 in FIG.1C can be aligned with and spaced from the teeth 220 of the stator 22.

In particular, the electromagnetic variable-speed motor 2 can be designed as an axial flux motor, a radial flux motor or a linear motor and driven in the same way as a BLDC, a BLAC or a permanent magnet synchronous motor so as to be used as a generator for converting mechanical energy to electrical energy. The variable-speed module 21 and the stator 22 can be formed integrally or separately. Referring to FIG.1A, the variable-speed module 21 and the stator 22 are spatially disposed and air gaps are formed therebetween. Alternatively, as shown in FIG.1B, the variable-speed module 21 and the stator 22 are integrally formed, and no air gap is formed therebetween. As such, windings (not shown) can extend from the teeth 220 to the variable-speed module 21 so as to improve the overall power of the motor. The windings can have a single layer structure or a multi-layer structure.

Further, the radian of the teeth 220 of the stator 22 can be designed to be equal to that of the permanent magnet structures 200 of the rotor 20. Furthermore, the radian of the teeth 220 of the stator 22 can be designed according to the magnetic pole-pairs of the permanent magnet structures 200 of the rotor 20. For example, in the case the radian of the teeth 220 of the stator 22 is greater than the radian of the permanent magnet structures 200 of the rotor 20, the positive and negative magnetic pole-pairs of the permanent magnet structures 200 of the rotor 20 can offset each other so as to avoid magnetic saturation of the stator 22, thereby increasing the torque density. In addition, the ratio of the number of magnetic pole-pairs of the stator 22 to the number of magnetic pole-pairs of the rotor 20 can be designed to be 1: n or n: 1, wherein n is greater than 1. In practice, n is usually designed to greater than 2, or is less than but close to 2, i.e., n being not close to 1.

Further, the variable-speed module 21 and the stator 22 can be designed to meet the equation 2 · m · npb= | GR± 1 |, wherein m is the number of phases of the stator 22, npb is the number of slots per phase band of the stator 22, GR represents the gear ratio, i.e., the ratio of the number of magnetic pole-pairs of the rotor 20, p1, to the number of magnetic pole-pairs of the stator 22, p2. Since the number of magnetic pole-pairs of the rotor 20 or stator 22 is the number of magnetic pole-pairs of the rotor 20 or stator 22 divided by 2, the gear ratio is also the ratio of the number of magnetic pole-pairs of the rotor 20 to the number of magnetic pole-pairs of the stator 22.

In an embodiment, the gear ratio GR is the ratio of the number of magnetic pole-pairs p1 of the rotor to the number of magnetic pole-pairs p2 of the stator, i.e., GR = p1/p2. It is further assumed that the pole number N of the variable-speed module meets the equation N= | p1±p2 |. Furthermore, if it is assumed that the number of the slots 221 of the stator 22 is Ns, the number of phases is m, the number of magnetic pole-pairs of the stator 22 is p2 and the number of slots 221 per phase band is npb, the equation Ns = 2 · m · npb · p2 can be obtained. Referring to FIGS. 1A and 1B, to make the pole number of the variable-speed module 21 be equal to the number of the slots 221, N= | p1±p2 | = 2 · m · npb · p2 = Ns. Finally, the equation GR = p1/p2 is inserted to obtain the first design equation 2 · m · npb = | GR±1 |.

According to the equation, in the case GR=5, p2=4, p1=20, N=24, a fully-pitched eight-pole three-phase motor can be applied such that 24 slots can be formed in the stator. Therefore, the stator 22 and the variable-speed module 21 completely match each other in geometry. It should be noted that p1 may be greater than or less than p2.

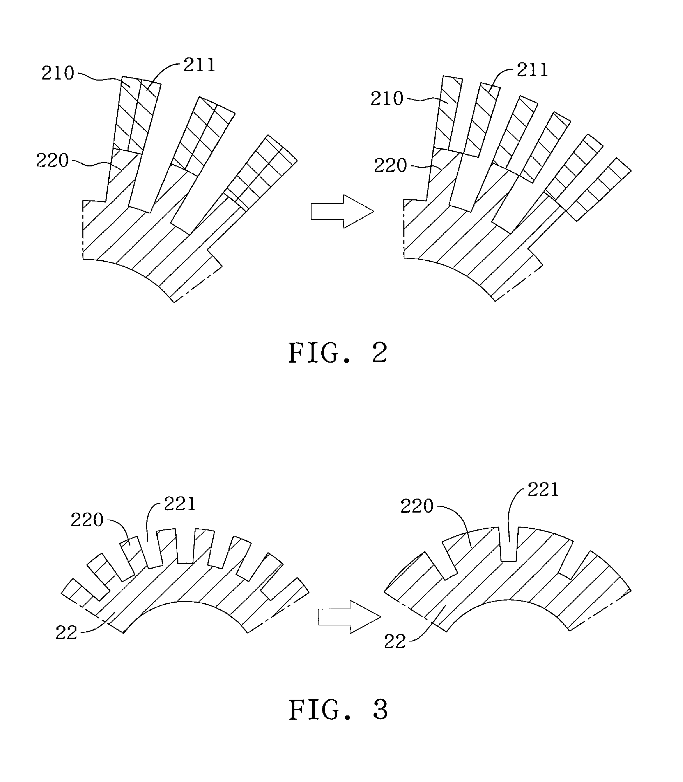

Referring to FIG.2 in combination with FIGS.1A to 1C, the variable-speed module 21 can have fastening members 210 fastened to the teeth 220 of the stator 22 and movable members 211 displaceable relative to the fastening members 210 so as to provide exemplary flexibility of use. In an embodiment, by changing a moving extent of movable members 211, i.e. an angle between one of the movable members 211 and the adjacent one of the fastening members 210, the density of flux linkage of magnetic filed between the stator and rotator can be manipulated. Basically, when the number of magnetic pole-pairs (p1) remains unchanged, the angle of the movable members 211 and the fastening members 210 results in a modification on the air gap permeance. As such, the change of the air gap permeance can be used in an application of altering the speed range of the motor. However, in this application, the fastening members 210 and the movable members 211 are not necessarily equal in radian. In other embodiments, more movable members 211 can be provided. For example, the pole number of the variable-speed module 21 can be increased from N to 2N, and the number of magnetic pole-pairs of the stator can be changed from p1 to p1' so as to meet the equation | p1'± p2 | = 2N. As such, the gear ratio is changed from p2/p1 to p2/p1'.

Referring to FIG.3 in combination with FIGS. 1A to 1C, the radian of the teeth 220 of the stator is usually equal to the radian of the slots 221 of the stator 22. In other embodiments, the radian of the teeth 220 of the stator 22 can be designed to be greater than the radian of the slots 221 of the stator 22 so as to provide different characteristics.

Further, the electromagnetic variable-speed motor can be designed without using the above-described design equation.

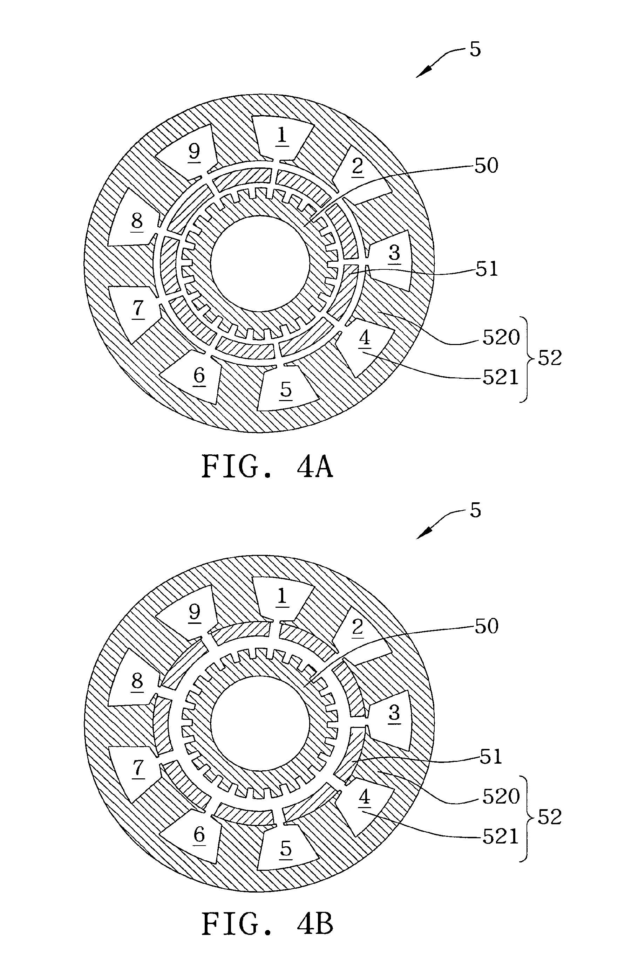

FIGS.4A and 4B illustrate an electromagnetic variable-speed motor 5 according to another embodiment of the disclosure. Therein, the rotor 50 has a plurality of permanent magnet structures. The stator 52 is disposed on the same axis as the rotor 50 and has nine teeth 520 and nine slots 521. The variable-speed module 51 is disposed on the same axis as the rotor 50 and the stator 52 and at a position between the rotor 50 and the stator 52. The pole number of the variable-speed module 51 is equal to the number of the slots 521 of the stator 52. The stator 52 and the variable-speed module 51 can be formed separately (as shown in FIG.4A) or integrally (as shown in FIG.4B).

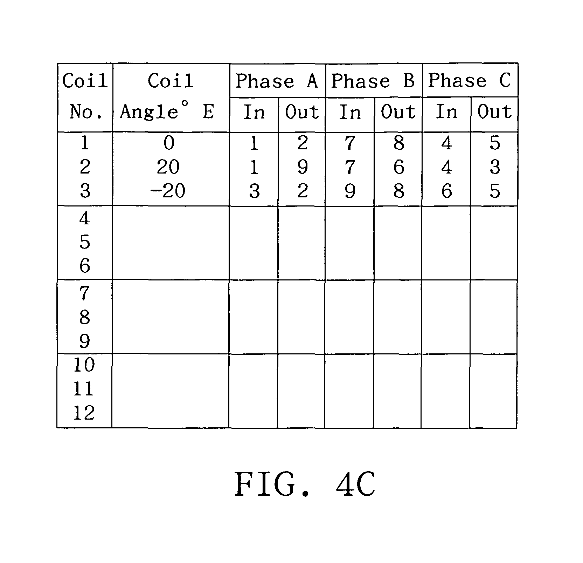

The windings (not shown) of the electromagnetic variable-speed motor 5 can be implemented according to the winding chart of FIG4C. That is, according to the reference numbers of the slots 521 denoted in FIGS.4A and 4B in combination with the winding chart of FIG4C, double-layer windings may be disposed on the stator. The number of pole-pairs of the stator 52 can be 8, that is, the number of magnetic pole-pairs P2=4. Further, the pole number of the variable-speed module 51 can be 26 and the number of magnetic pole-pairs of the rotor 50 can be 13. As such, a gear ratio of 13/4 is obtained.

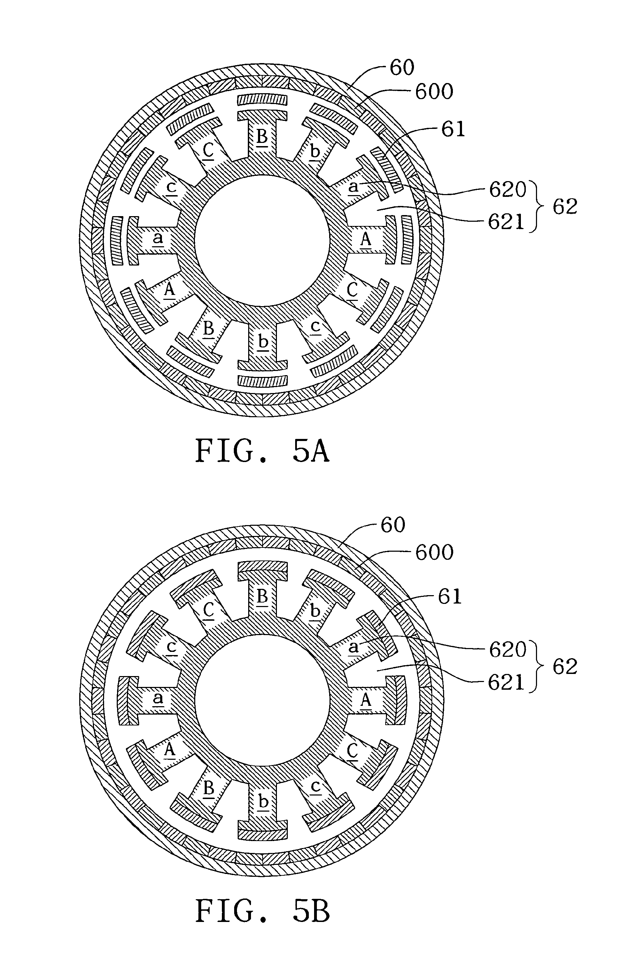

Referring to FIGS.5A to 5C, the electromagnetic variable-speed motor can be designed to meet the design equation | (R/2)±P1 | = Ns. It should be noted that the design equation can be applied when the stator and winding mode of an LRK (Lucas, Retzbach and Kühfuss) motor is applied to the stator of the electromagnetic variable-speed motor of the disclosure. Therein, R is the number of magnetic poles of the rotor of the LRK motor, Ns is the number of stator arms, i.e., the number of slots of the stator of the LRK motor, and P1 is the number of magnetic pole-pairs of the rotor of the electromagnetic variable-speed motor. In addition, the winding mode of a D-LRK (a distributed LRK) motor can be used for forming a split phase motor.

In particular, the electromagnetic variable-speed motor 6 can have a rotor 60 with a plurality of permanent magnet structures 600, a stator 62 disposed on the same axis as the rotor 60 and having teeth 620 and slots 621, and a variable-speed module 61 disposed on the same axis as the rotor 60 and the stator 62 and at a position between the rotor 60 and the stator 62. Further, the number of the slots 621 is equal to the pole number of the variable-speed module 61, and the ratio of the number of magnetic pole-pairs of the stator 62 to the number of magnetic pole-pairs of the rotor 60 is 1:n or n:1, wherein n is greater than 1.

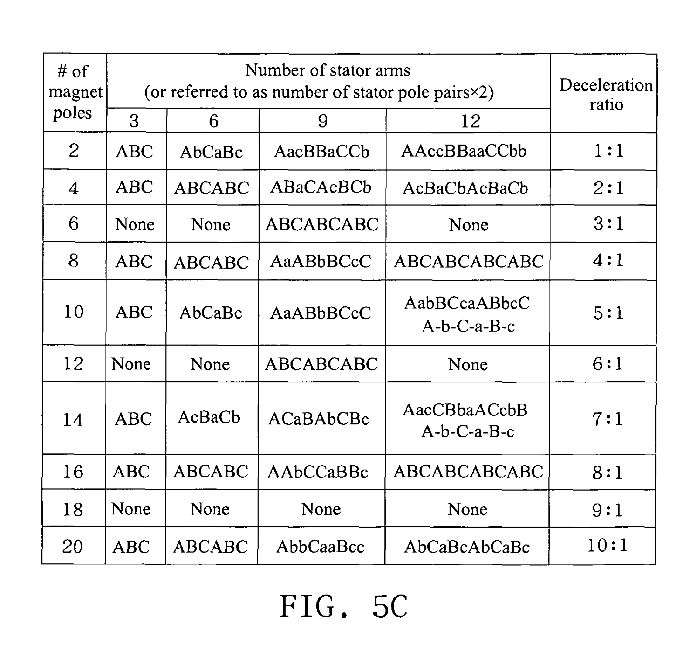

The windings of the stator 62 can be implemented according to the winding chart of FIG.5C. That is, the winding of the stator 62 can be implemented according to A, a, B, b, C, c denoted in FIGS.5A and 5B in combination with the winding chart of FIG.5C.

In particular, A, B, C in FIGS.5A and 5B respectively represent clockwise winding modes at the teeth 620 for the first phase, the second phase and the third phase, while a, b, c respectively represent counter-clockwise windings modes at the teeth 620 for phases opposite to the first phase, the second phase and the third phase. A conventional winding mode can be understood according to FIG.5C. When an LRK motor without using the variable-speed module of the disclosure is designed, if the number of magnetic pole-pairs of the rotor is set to be 4, the number of the slots 621, i.e., the number of stator arms is set to be 9 and a winding mode of ABaCAcBCb is performed, a conventional gear ratio of 2:1 can be obtained.

To make the variable-speed module 61 completely match the teeth 620 of the stator as shown in FIGS.5A and 5B, if the number of the slots 621 or teeth 620 of the stator 62 is, for example, 12, "Number of stator arms" of 12 and "# of magnetic pole-pairs" of 14 in the winding chart of FIG.5C can be chosen, that is Ns=12 and R=14. As such, since the pole number of the variable-speed module 61 is equal to the number of the slots 621, the pole number of the variable-speed module 61 is also 12. That is, Ns=12 represents the pole number of the variable-speed module 61. According to the design equation | (R/2) ±P1 | = Ns, the number of magnetic pole-pairs P1 of the rotor 60 needs to be 19. Accordingly, the number of the permanent magnet structures 600 of the rotor 60 is 38. As such, the design of an electromagnetic variable-speed motor of the disclosure is achieved.

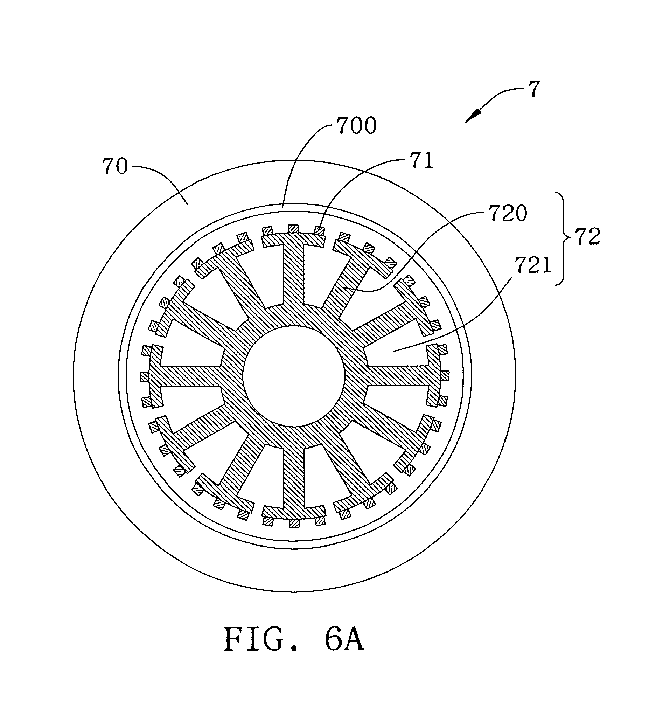

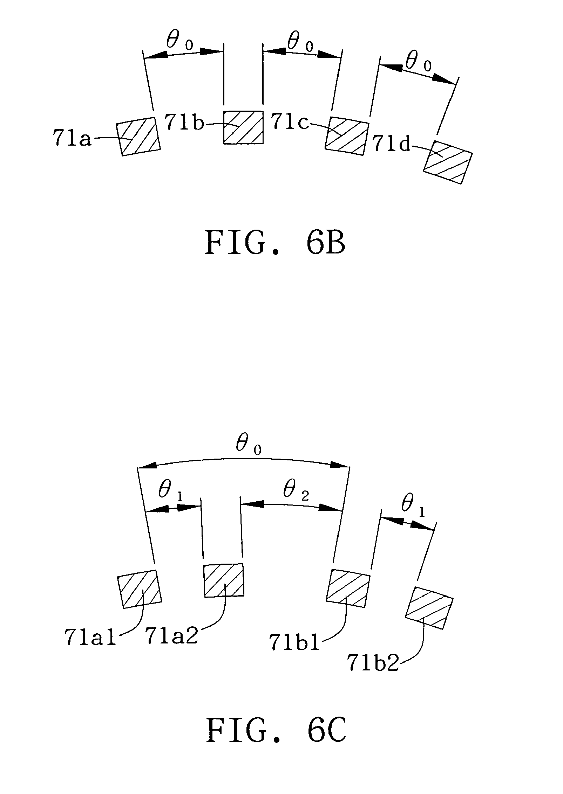

Referring to FIG. 6, an electromagnetic variable-speed motor of another embodiment according to the present disclosure is shown. As shown, an electromagnetic variable-speed motor 7 comprises a rotor 70, a variable-speed module 71 and a stator 72.

The rotor 70 has a permanent magnet structure 700. The stator 72 is coaxially disposed with the rotor 70 and has a plurality of teeth 720 and a plurality of slots 721. The variable-speed module 71 is coaxially disposed with the rotor 70 and the stator 72 and disposed between the rotor 70 and the stator 72. The rotor 70, the variable-speed module 71 and the stator 72 are the same as those shown in previous embodiments, further description thereof hereby omitted.

The present embodiment differs from the previous embodiments in that the pole number of the variable-speed module 72 is equal to an integer multiplied with the number of the teeth 720, and the pole number of the variable-speed module is equal to an absolute value of the number of magnetic pole pairs of the rotor 70 added/subtracted by the number of magnetic pole pairs of the stator 72. For example, if the variable-speed module 71 has N poles, the rotor 70 has R magnetic pole-pairs, and the stator 72 has S magnetic pole-pairs, N= | R±S |.

In an embodiment, the variable-speed module 71 and the stator 72 are disposed separately, as shown in FIG.6A. Of course, the variable-speed module 71 can be integrated with the stator 72. The number of the variable-speed module 71 may be adjusted, and can be designed to comprise a fixing element and a variable element that is movable with respect to the fixing element, referring to the concept shown in FIG.2.

It can be known from FIG. 6A and FIG.6B (which is a locally enlarged view of FIG.6A) that, in the present embodiment, the variable-speed module 71 is in an evenly distributed form. As shown in FIG.6B, the variable-speed modules 71 a, 71 b, 71c and 71d are separated at an angle θ₀, the number of groups of the variable-speed module 71 is N, the number of the variable-speed module 71 is Ns, the stator 72 has S magnetic pole-pairs, the rotor 70 has R magnetic pole-pairs, Ns=qN (e.g., q=1, 2, 3, etc.), and N= | S±R |. If q is assumed to be equal to 1, 0≦θ₀≦2π/N. Alternatively, if q is assumed to be greater than 1, 0≦θ₁+...+θ_{(q-1)}≦2π/N. The plurality of period groups N is in an evenly distributed form (as shown in FIG.6B, where θ₀ is constant), while the individual variable-speed module inside of the individual period group N may or may not be evenly distributed.

In another embodiment, the variable-speed module has N period group, the number of the variable-speed module is Ns, the stator has S magnetic pole-pairs, the rotor has R magnetic pole-pairs, and Ns=qN (e.g., q=1, 2, 3, etc.). Different from the previous embodiments, the number of the variable-speed module is Ns= | S±R |. . If q is assumed to be equal to 1, 0≦θ_{0≦}2π/N. If q is assumed to be greater than 1, 0≦θ ₁+...+θ_{(q-1)≦}2π/N.

If the concept of the fixing element and movable element is applied to FIG.6B, FIG.6B may be changed to be shown as FIG6C. In FIG.6C, Ns-2N, the variable-speed module 71a is divided into a fixing element 71a1 and a movable element 71a2, and the variable-speed module 71b is divided into a fixing element 71b1 and a movable element 71b2. Similarly, the fixing element 71a1 and the fixing element 71b1 are separated at θ₀.

In yet another embodiment, when the electromagnetic variable-speed motor 7 is applied to driving a motor car, is the motor car is climbing a hill, a corresponding controlling device may be used to move the movable element of the variable-speed module 71 by an angle, e.g., ± θ, in order to greatly reduce the reluctance force and facilitate moving the motor car. When a driver intends to slow down or stop the car, the movable element of the variable-speed module 71 may also move by an angle, such that the reluctance force of the electromagnetic variable-speed motor 7 itself may provide help.

Therefore, the disclosure allows the electromagnetic variable-speed motor to meet specific design equations such that the stator and the variable-speed module of the motor can completely match each other in geometry, thereby simplifying the fabrication process, reducing the number of components, strengthening the overall structure and facilitating the disposing of the windings so as to reduce the fabrication cost.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. An electromagnetic variable-speed motor, comprising:
a rotor having a plurality of permanent magnet structures;
a stator coaxially disposed with the rotor and having a plurality of teeth and a plurality of slots; and
a variable-speed module coaxially disposed with the rotor and the stator and at a position between the rotor and the stator, wherein the pole number of the variable-speed module is no greater than the number of the slots of the stator, and the ratio of the number of magnetic pole-pairs of the stator to the number of magnetic pole-pairs of the rotor is 1: n or n: 1, wherein n is greater than 1.

2. The motor of claim 1, wherein the variable-speed module and the stator are designed to meet an equation 2 · m · npb = | GR±1 |, wherein m is the number of phases, npb is the number of slots per phase band, GR represents a gear ratio, which is derived from the number of magnetic pole-pairs of the rotor divided by the number of magnetic pole-pairs of the stator.

3. The motor of claim 1, wherein the stator is designed to be used in a split phase motor, and the electromagnetic variable-speed motor is designed to meet an equation | (R/2)± P1 | = Ns, wherein R is the number of magnetic poles of the rotor used in the split phase motor, P1 is the number of the magnetic pole-pairs of the rotor, Ns is the pole number of the variable-speed module or the number of the slots of the stator.

4. The motor of claim 1, wherein the variable-speed module and the stator are formed integrally or separately.

5. The motor of claim 1, wherein the variable-speed module comprises fastening members and movable members displaceable relative to the fastening members.

6. The motor of claim 5, wherein the fastening members and the stator are integrally formed.

7. The motor of claim 1, wherein the electromagnetic variable-speed motor is designed to be an axial flux motor, a radial flux motor or a linear motor.

8. The motor of claim 1, wherein the radian of the teeth of the stator is greater than the radian of the slots of the stator.

9. The motor of claim 1, wherein the radian of the teeth of the stator is equal to the radian of the permanent magnet structures.

10. The motor of claim 1, being used as a generator.

11. An electromagnetic variable-speed motor, comprising:
a rotor having a plurality of permanent magnet structures;
a stator coaxially disposed with the rotor and having a plurality of teeth and a plurality of slots; and
a variable-speed module coaxially disposed with the rotor and the stator and at a position between the rotor and the stator, wherein the pole number of the variable-speed module is equal to an integer multiplied with the number of period group of the variable-speed module.

12. The motor of claim 11, wherein the number of period group of the variable-speed module is equal to an absolute value of the number of magnetic pole-pairs of the rotor added/subtracted by the number of magnetic pole-pairs of the stator.

13. The motor of claim 11, wherein the number of the variable-speed module is equal to an absolute value of the number of magnetic pole-pairs of the rotor added/subtracted by the number of magnetic pole-pairs of the stator.

14. The motor of claim 11, wherein the variable-speed module comprises a fixing element and a movable element movable with respect to the fixing element.

15. The motor of claim 11, wherein the variable-speed module is in an evenly distributed form.
